# EUROPEAN PATENT APPLICATION

(11) **EP 3 012 816 A1**
(43) Date of publication of application: **27.04.2016**
(21) Application number: 15190904.1
(22) Date of filing: 21.10.2015
(51) Int. Cl.: G08G 5/00

(54) **METHODS AND SYSTEMS FOR MANAGING SITUATION AWARENESS INFORMATION AND ALERTS IN A COCKPIT DISPLAY**

(30) Priority: 22.10.2014 US 201462067134 P; 22.09.2015 US 201514860849
(71) Applicant: Honeywell International Inc., Morris Plains, NJ 07950 (US)
(72) Inventor: Derouineau, Jean-Luc, Morris Plains, NJ 07950 (US); Dusik, Matej, Morris Plains, NJ 07950 (US)
(74) Representative: Houghton, Mark Phillip

(57) **Abstract**

Methods and system are provided for displaying information on a display device of an aircraft as well as processing crowd sourced information from other aircraft, sensors and information systems in a ground server, and provide it back to aircraft via communication means. In one embodiment, the method includesretrieving information that indicates a current situation and that has been entered by a user, the information being from at least one of a server and another aircraft; determining current situation display data based on the information; and graphically displaying the information on the display based on the current situation display data.

## Description

### CROSS REFERENCE TO RELATED APPLICATIONS

This application claims the benefit of U.S. Provisional Application No. 67/067,134 filed October 22, 2014, which is hereby incorporated by reference in its entirety.

### TECHNICAL FIELD

The present disclosure generally relates to methods and systems for managing and presentingsituational awareness information.

### BACKGROUND

An aircraft crew member, such as a pilot or other member of anaircraft may experience various situations during flight that they may wish to make available tomembers of other aircraft.For example, a crew member may experience certain weather or traffic conditions that they may wish to share with other aircraft that are headed in a same or similar flight path. In addition, such a crew member may also want to query other aircraft or information sources about situations that they may encounter during flight.

This sharing of situation information can be initiated by a crew member or can be automatic, for example using data that is collected onboard the aircraft. However,aircraft crew members typically have no easy or interactive way of reporting such conditions. In addition, aircraft crew members typically have no easy or interactive way of accessing information about relevant situation they might encounter during flight. For example, to report and receive severe weather information, a pilot currently usescertain messages or other non-intuitive methods (voice/text) to provide information to operation centers. The operations centers may or may not distribute the information to otheraircraft.

Hence, there is a need for an intuitive systems and methods for entering, requesting, sharing, displaying and communicating this situational information to other participants of the air traffic as well as ground systems, which may benefit from the information. Other desirable features and characteristics will become apparent from the subsequent detailed description and the appended claims, taken in conjunction with the accompanying drawings and the foregoing technical field and background.

### BRIEF SUMMARY

Methods and system are provided for displaying information on a display device of an aircraft. In one embodiment, the method includes retrieving information that indicates a current situation and that has been entered by a user, the information being from at least one of a server and another aircraft; determining current situation display data based on the information; and graphically displaying the information on the display based on the current situation display data.

In another embodiment, a system includes: an information datastore, and a computer module. The information datastore stores information that indicates a current situation entered by a user of at least on other aircraft. The computer module receives the information from the information datastore, determines current situation display data based on the information, and graphically displays the information on the display based on the current situation display data.

Furthermore, other desirable features and characteristics of the method and system will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following figures, wherein like numerals denote like elements, and wherein:
FIG. 1 is a functional block diagram illustrating a situational a wareness information system for an aircraft in accordance with exemplary embodiments;
FIG.2 is dataflow diagram illustrating a situational awareness system of an aircraftin accordance with exemplary embodiments;
FIG. 3 is an illustration of a user interface that may be generated by the situational awarenesssystem and displayed on a display device of the aircraft in accordance with exemplary embodiments; and
FIGS. 4 and 5 are flowcharts illustrating situational information methods that may be performed by the situational awareness system in accordance with exemplary embodiments.

### DETAILED DESCRIPTION

The following detailed description is merely exemplary in nature and is not intended to limit the disclosure or the application and uses of the disclosure. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

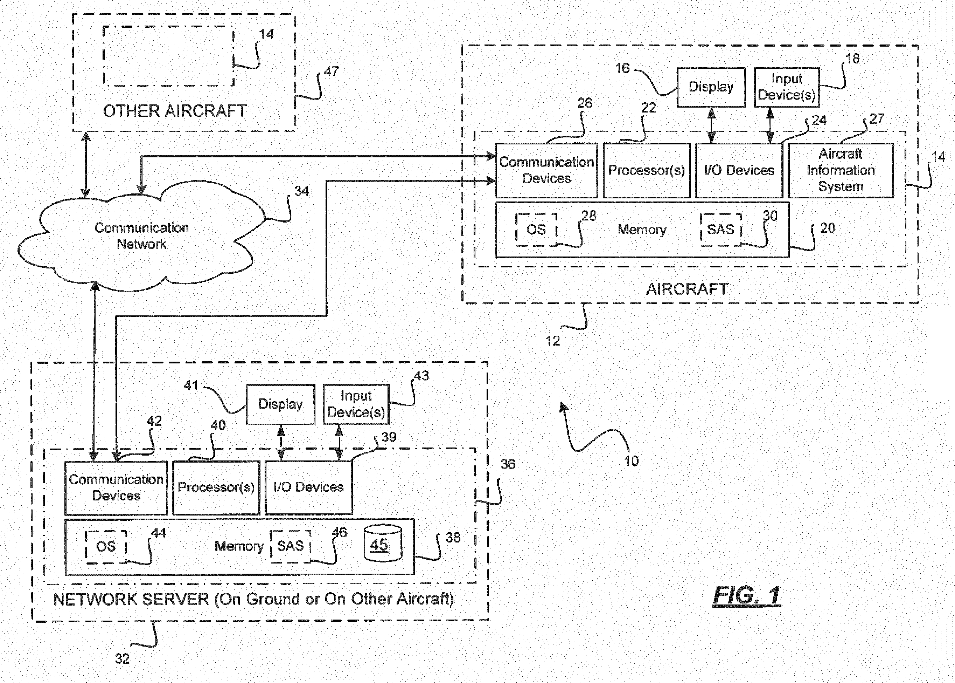

Referring now to FIG. 1, exemplary embodiments of the present disclosure are directed to a situational awareness information system shown generally at 10 that is associated with an aircraft 12. As can be appreciated, the situational a wareness information system 10 described herein can be implemented for any aircraft 12 having onboard a computing device 14 that is associated with a display device 16 and one or more input devices 18. The computing device 14 of the aircraft 12 may generally includememory 20,one or more processors 22, one or more input/output controllers 24(i.e., that are communicatively coupled to the display device 16 and the one or more input devices 18), one or more communication devices 26 (e.g., that communicate to and from ground systems and/or other aircraft), and an aircraft information system 27.

In various embodiments, the memory 20 stores instructions that can be performed by the processor 22. The instructions stored in memory 20 may include one or more separate programs, each of which comprises an ordered listing of executable instructions for implementing logical functions. In the example of FIG. 1, the instructions stored in the memory include an operating system (OS) 28 and a situational awarenesssystem 30. The operating system28 controls the performance of other computer programs and provides scheduling, input-output control, file and data management, memory management, and communication control and related services. The situational awarenesssystem 30 enables users to enter, request, and receive situational awareness information. The situational awareness system 30 manages the situational awareness information based on aircraft information such as a current time, a current location, a current altitude, and/or other information and based on fused data received from other systems that collect data form other sensors, aircraft, and data sources. In various embodiments, the situational awareness system 30 receives the aircraft information from the aircraft information system 27. The aircraft information system 27 determines the aircraft information from sensors/systems onboard and/or remote from the aircraft 12.

When the computing device14 is in operation, the processor 22 is configured to execute the instructions stored within the memory, to communicate data to and from the memory, and to generally control operations of the computing device14 pursuant to the instructions. The processor 22 can be any custom made or commercially available processor, a central processing unit (CPU), an auxiliary processor among several processors associated with the computing device 14, a semiconductor based microprocessor (in the form of a microchip or chip set), a macroprocessor, or generally any device for executing instructions. The processor 22 executes the instructions of thesituational awareness system 30 of the present disclosure.

In various embodiments, the situational awareness system 30 is configured to communicate situational awareness information to and from a network server32 (e.g., located on the ground or another aircraft) and optionally, another aircraft 47 via the communication device(s) 26. The communication device26 is configured to communicate to the network server 32 (or other aircraft 47) either directly or indirectly using one or more communication methods. For example, the communication device 26 may communicate directly using a predefined communication protocol (e.g., wire or wireless solution) and/or may communicate indirectly through one or more communication networks 34 that communicate via one or more predefined communication protocols (e.g., SATCOM, cellular communication networks, Wi-Fi, etc.).

The network server 32 may be a collection of servers or a single server. The network server 32 similarly includes at least one computing device 36. The computing device 36 may generally include memory 38,one or more processors 40, one or more input/output controllers 39 (i.e., that are communicatively coupled to a display device 41 and the one or more input devices 43),and one or more communication devices42 (e.g., that communicate to and from other servers (not shown) and/or the aircraft 12, 47). In various embodiments, the memory 38stores instructions that can be performed by the processor40.

The instructions stored in memory 38may include one or more separate programs, each of which comprises an ordered listing of executable instructions for implementing logical functions. In the example of FIG. 1, the instructions stored in the memory include an operating system (OS) 44and a situational awarenesssystem 46. The operating system44essentially controls the performance of other computer programs and provides scheduling, input-output control, file and data management, memory management, and communication control and related services.

The situational awarenesssystem 46manages situational awareness information provided by aircraft 12 and/or the other aircraft47. For example, the situational awareness system 46 receives situational awareness data from the aircraft 12 and selectively communicates the situational awareness data to other aircraft47 that similarly include a computing device 14 having a situational awareness system30 (and vice versa). In various embodiments, the situational awareness system 46provides back to the aircraft 12, 47 consolidated situation awareness information with higher value by fusing information from the various information sources and storing the fused data in a datastore 45 for later communication. The situational awareness system 46 communicates the fused situational awareness data through the communication network 34.

In various embodiments, the situational awareness system 46 selectively communicates the situational awareness data to aircraftwhich are determined to be in a current network (e.g., in communication reach and capable/authorized to communicate). For example, situational awareness system 46 determines which aircraft are on the network and which aircraft on the network may benefit from the situation data (e.g., aircraft that may traveling in a flight path where the situation is relevant). The display device 41 optionally displays interfaces to allow ground crew to manage and/or enhance the quality of the shared information.

When the computing device36is in operation, the processor 40is configured to execute the instructions stored within the memory, to communicate data to and from the memory, and to generally control operations of the computing device36pursuant to the instructions. The processor 40can be any custom made or commercially available processor, a central processing unit (CPU), an auxiliary processor among several processors associated with the computing device 36, a semiconductor based microprocessor (in the form of a microchip or chip set), a macroprocessor, or generally any device for executing instructions. The processor 40executes the instructions of thesituational awareness system 46 of the present disclosure.

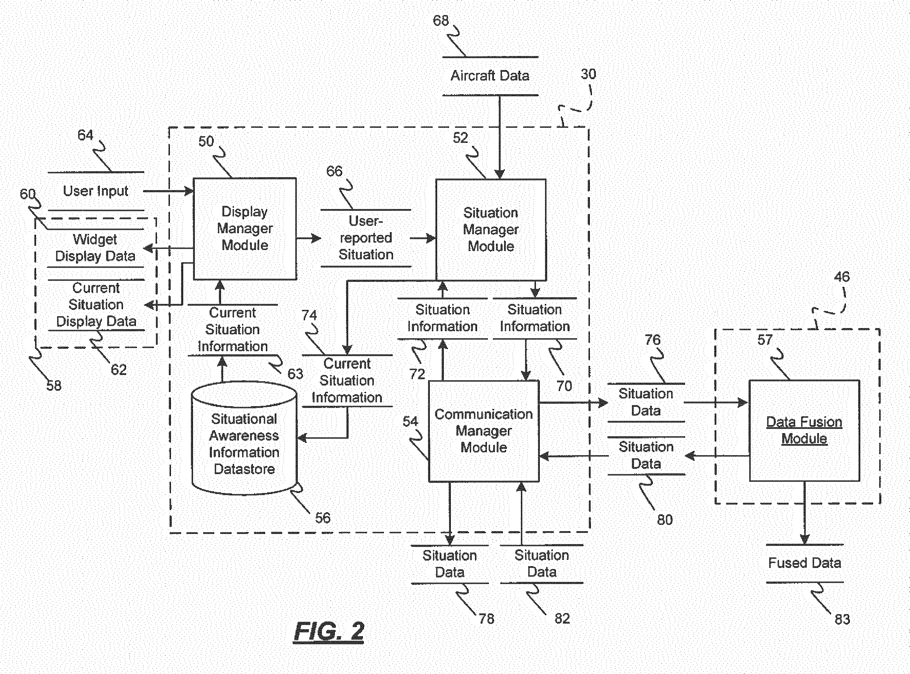

Referring now to FIG. 2, a dataflow diagram illustrates various embodiments of thesituational awareness system 30 of the aircraft 12, 47 and the situation awareness system 36 of the network server 32. Various embodiments of situational awareness systems 30, 36according to the present disclosure may include any number of sub-modules embedded within the situational awareness systems 30, 36. As can be appreciated, the sub-modules shown in FIG. 2 may be combined and/or further partitioned to similarly allow a user to enter and receive situational awareness information. Inputs to the situational awareness systems 30, 36may be received from other modules or other systems either on ground or onboard (not shown) an aircraft, determined/modeled by other sub-modules (not shown) within the situational awareness systems 30, 36, and/or may be user input that is based on a user interacting with a user interfacevia the input device 18. In various embodiments, the situational awareness system 30 includesa display manager module 50, a situation manager module 52, a communication manager module 54, and a situational awareness information datastore 56.

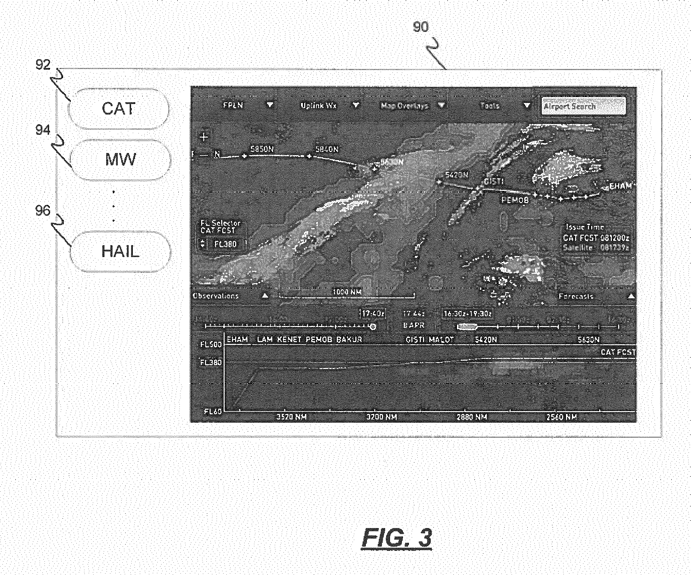

The display manager module 50 generates display data 58 for displaying on the display device 16 (FIG. 1) a user interface90 (FIG. 3) that is used for entering, requesting and displaying situational awareness information. The display data 58 includes, for example, widget display data 60 and current situation display data 62. The widget display data 60includes data used to display various selectable buttons (or other display features) that are associated with particular situations. The current situation display data 62 includes data used to display various display widgets (or other display features) that indicate current situations associated with a current flight path. The current situations may be determined from current situation information 63 retrieved from the situational awareness information datastore 56 and may include, for example, situations reported by the aircraft12 (FIG. 1) and that are current to the aircraft 12, and/or reported by other aircraft 47 (FIG. 1) when information is relevant (e.g. located ahead on the current flight path).The situation display data 62 may include data to display widgets indicating the availability of relevant information from other aircraft or ground systems.

For example, as shown in the exemplary user interface 90 of FIG. 3, the selectable buttons 92-96 can each indicate a particular situation such as a weather situation (e.g., CAT-clear air turbulence, MW- mountain wave, HAIL- hail, etc.).As shown in FIG. 3, any number of selectable buttons 92-96 may be provided on the user interface 90. As can be appreciated, the selectable buttons 92-96 may be associated with any number of situations, such as, but not limited to, weather situations, hazard situations, traffic situations, combat situations, etc. The user interface might also be used to allow crew of aircraft 12 (FIG 1) to exchange messages with other aircraft 47 (FIG 1) as well as to request specific information from other aircraft 47 (FIG 1) or ground systems, that could be provided automatically or after authorization (e.g., radar data, traffic data, etc.)

In various embodiments, display widgets that display the current situations may be displayed in relation to a map (e.g., a two-dimensional or three-dimensional map) of the current flight path. For example, the display widgets can display the current situations reported by other aircraft as a graphic on the map relative to a reported location. In another example, the display widget can display other aircraft located ahead of the current flight path as a graphic on the map relative to the other aircraft's reported location. This type of widget can be used to designate the source of information (e.g. other aircraft) from which a crew member would like to receive information or start an exchange.

With reference back to FIG. 2, the selectable buttons, when selected by a user via the input device, generates user input data 64 indicating the selected situation. The display manager module 50 receives the user input data 64 and determines user-reported situation data 66 therefrom. When requesting situational data, the crew would first select the source from which it is requesting the data, before selecting the type of information. Alternatively, when responding manually to another aircraft request, in case an automatic response is not allowed, the crew can select the type of information followed with the destination to which it is responding. All of these selections (data, source, and destination) can be associated with graphic widgets that are very intuitive.

The situation manager module 52 receives the user-reported situation data 66 and aircraft data 68. The aircraft data 68 may include for example, a current time, a current location, and a current altitude associated with the aircraft 12. It could also include data from weather and traffic sensors. The aircraft data 68 may be received from, for example, the aircraft information system27 or any ground information systems. The situation manager module 52 associates the user-reported situation data 66 with the aircraft data 68 to provide situation information 70 associated with the aircraft 12.

The situation manager module 52 may further receive situation information 72 reported from other aircraft 47 (FIG. 1) or from the network server 32 (FIG. 1). The situation manager module 52 determines whether the information is relevant for the aircraft 12 (FIG. 1). If it is relevant, the situation manager module 52 stores the situation information as current situation information 74 in the situational awareness information datastore 56 for use by the display manager module 50. Optionally, the situation manager module52 stores the situation information 70 as current situation information 74 in the situational awareness information datastore56 for use by the display manager module 50.

The communication manager module 54 receives the situation information 70 and communicates the situation information 70 as situation data 76, 78to the network server32 (FIG. 1) and/or to other aircraft47 (FIG. 1). When the communication manager module 54 is configured to communicate the situation data to other aircraft 47 (FIG. 1), the communication manager module 54 determines which aircraft are in a current network (e.g., in communication reach and capable of communicating). For example, based on other situation data 80, 82 received from other aircraft 47 (FIG. 1) and/or the network server 32 (FIG. 1), the communication manager module 54 determines which aircraft are on the network and which aircraft on the network may benefit from the situation data (e.g., aircraft that may traveling with relevant flight path).

The communication manager module 54 receives the other fused situation data 80, 82 communicated from the network server 32 (FIG. 1) and/or the other aircraft 47 (FIG. 1) and provides situation information 72 from the situation data 80, 82 to the situation manager module 52 for further processing.

The data fusion module 57 receives the situation data 76 communicated from the communication manager module 54 of the aircraft 12 (FIG. 1) and/or the other aircraft 47 (FIG. 1). In various embodiments, the data fusion module 57 performs one or more deep machine learning methods on the received data to gain semantic understanding of the data. In various embodiments, the data fusion module 57 performs one or more data mining methods on all of the received data. As a result, the data fusion module 57 provides situation data 80 and/or fused data 83 with a higher value including current needs and situations, thus increasing the overall situation awareness of the pilots and other users.

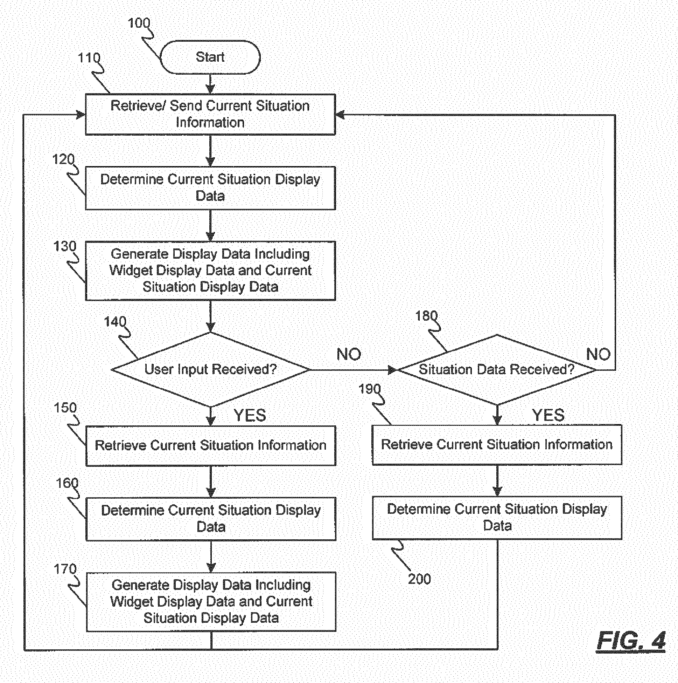

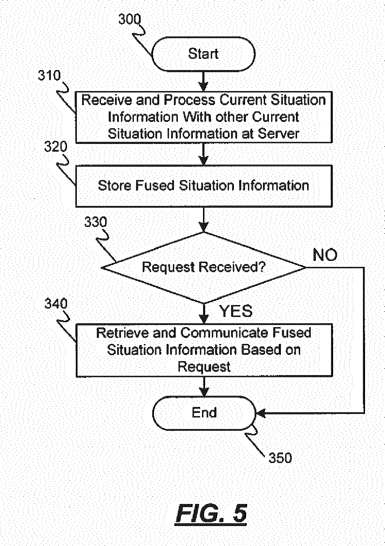

Referring now to FIGS. 4 and5, and with continued reference to FIGS. 1 through 3, flowcharts illustrate methods that may be performed by the situational awareness information system 10 of FIG. 1 in accordance with the present disclosure. As can be appreciated in light of the disclosure, the order of operation within the method is not limited to the sequential execution as illustrated in FIGS. 4 and5, but may be performed in one or more varying orders as applicable and in accordance with the present disclosure.

In various embodiments, one or more parts of the methods can be scheduled to run based on predetermined events, and/or can be scheduled to run continually during operation of the computing devices14, 36.

In one example, as shown in FIG. 4, a method performed by the computing device of the aircraft 12, 47 may begin at 100. The current situation information 63 is retrieved from the situational awareness information datastore 56 at 110. The current situation display data 62 is determined based on the current situation information 63 and the current or desired flight path at 120. The display data 58is generated including the widget display data 60 and the current situation display data 62 to display the interface at 130.

It is determined whether user input 64 is received at 140, for example, based on a user interacting with the user interface via one or more of the input devices 18. If user input 64 is received at 140, the user input 64 is processed at 150 to determine the user-reported situationdata 66. The user-reported situation data66 is associated with current aircraft data 68 at 160 to generate situation information 70. The situation information 70 is stored as current situation information 74 in the situational awareness information datastore 56 and/or is communicated as situation data 76, 78 at 170 to the network server32 on board or on ground and/or the other aircraft 47. Thereafter, the method continues at 110.

If, at 140, user input is not received, it is determined whether situation data 80, 82 is received at 180 for example, from other aircraft or from the network server 32. If situation data 80, 82 is received at 180, the situation information 72 is determined from the situation data 80, 82 at 190, and the situation information 72 is processed and stored as the current situation information 74 in the situational awareness information datastore at 200. Thereafter, the method continues at 110.

If, at 180, situation data 80, 82 is not received, the method continues at 110. As can be appreciated, the method may continue as long as the computing device 14 is operational, or as long as the user interface is active.

In another example, as shown in FIG. 5, method performed by the computing device of the aircraft 12, 47 may begin at 300. The current situation information 63 is received from the aircraft 12 or 47 and processed with other situation information at 310. The fused situation information is stored in the datastore 45 at 320.

It is determined whether a request for information is received at 330. If a request is not received at 340, the method may end at 350. If, however, a request is received at 330, the situation information is retrieved from the datastore 45 and communicated to the requesting aircraft 12, 47 at 340. Thereafter, the method may end at 350.

Those of skill in the art will appreciate that the various illustrative logical blocks, modules, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In this document, relational terms such as first and second, and the like may be used solely to distinguish one entity or action from another entity or action without necessarily requiring or implying any actual such relationship or order between such entities or actions. Numerical ordinals such as "first," "second,""third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method of displaying information on a display device of an aircraft, comprising:
retrieving information that indicates a current situation and that has been entered by a user, the information being from at least one of a server and another aircraft;
determining current situation display data based on the information; and
graphically displaying the information on the display based on the current situation display data.

2. The method of claim 1, wherein the information indicating the current situation has been entered by a user of another aircraft.

3. The method of claim 1, wherein the current situation display data includes data indicating a graphical representation of the current situation.

4. The method of claim 1, wherein the current situation display data further includes data indicating the graphical representation of the current situation relative to a location on a map.

5. The method of claim 1, further comprising graphically displaying at least one situation selection button on the display, and wherein selection of the selection button by a user generates information indicating a current situation of the aircraft.

6. The method of claim 1, further comprising communicating the information indicating the current situation to at least one of a network server and another aircraft.

7. The method of claim 1, further comprising performing one or more semantic understanding methods and data mining methods on the information received from the aircraft and other aircraft.

8. The method of claim 1, further comprising receiving the information indicating the current situation from another aircraft and storing the information.

9. The method of claim 1, further comprising receiving the information indicating the current situation from a network server and storing the information.

10. A system for displaying information on a display device of an aircraft, comprising:
an information datastore that stores information that indicates a current situation entered by a user of at least on other aircraft; and
a computer module that receives the information from the information datastore, that determines current situation display data based on the information, and that graphically displays the information on the display based on the current situation display data.
